# EUROPEAN PATENT APPLICATION

(11) **EP 4 672 392 A1**
(43) Date of publication of application: **31.12.2025**
(21) Application number: 24811373.0
(22) Date of filing: 21.05.2024
(51) Int. Cl.: H01M 10/04, H01M 50/557

(54) **BATTERY CELL PRESSING JIG AND BATTERY CELL GAS REMOVAL SYSTEM COMPRISING SAME**

(30) Priority: 23.05.2023 KR 20230066310
(71) Applicant: LG ENERGY SOLUTION, LTD., Seoul 07335 (KR)
(72) Inventor: YOO, Duk Hyun, Daejeon 34122 (KR)
(74) Representative: Goddar, Heinz J.
(86) International application number: PCT/KR2024/006826
(87) International publication number: WO 2024/242434

(57) **Abstract**

A battery cell pressurizing jig related to one example of the present invention comprises a first pressurizing part for pressurizing one surface of a battery cell including an electrode assembly, a pair of lead tabs electrically connected to the electrode assembly, and a cell case surrounding the electrode assembly, and a second pressurizing part disposed to face the first pressurizing part and for pressurizing the other surface of the battery cell, wherein the first pressurizing part comprises a first assembly block portion provided to pressurize an assembly region where the electrode assembly is disposed on one surface of the battery cell, and a pair of first tap block portions each provided to pressurize a pair of lead tab regions including a boundary region between each lead tab and the cell case.

## Description

### Technical Field

The present invention relates to a battery cell pressurizing jig and a battery cell gas removal system comprising the same, and more specifically, relates to a battery cell pressurizing jig capable of individually pressurizing an assembly region and a lead tab region on one surface and the other surface of a battery cell, and a battery cell gas removal system comprising the same

This application claims the benefit of priority based on Korean Patent Application No. 10-2023-0066310 dated May 23, 2023, the disclosure of which is incorporated herein by reference in its entirety.

### Background Art

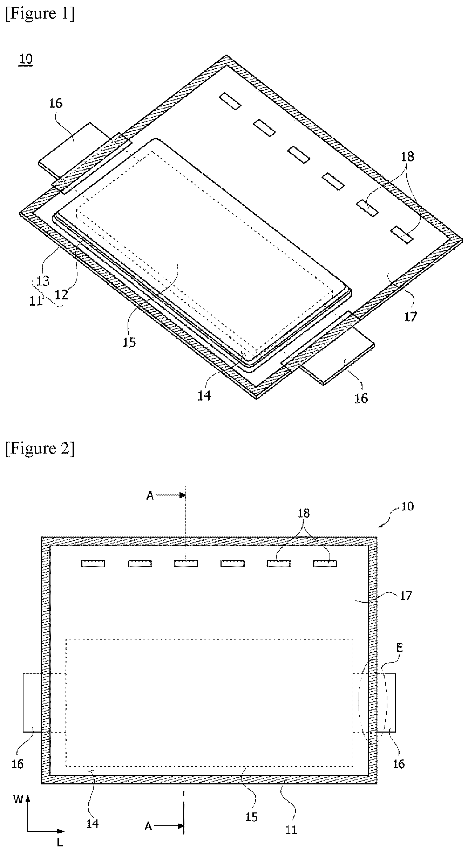

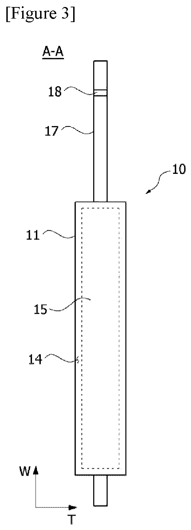

Figure 1 is a perspective diagram of a general pouch-type battery cell, Figure 2 is a plan view of a pouch-type battery cell in a state where a degas hole is provided in a gas pocket, and Figure 3 is a cross-sectional diagram cut along Line A-A of Figure 2.

The pouch-type battery cell (10) comprises a cell case (11), an electrode assembly (15), and a pair of lead tabs (16) electrically connected to the electrode assembly. The electrode assembly (15) is accommodated in the cell case (11). The electrode assembly (15) is made by alternately laminating a positive electrode, a separator, and a negative electrode.

In addition, the pouch-type battery cell (10) has an accommodating groove (12) in which the electrode assembly (15) is disposed, and a sealed edge portion (13). The pair of lead tabs (16) is exposed to the outside of the cell case (11) through the edge portion (13). In addition, the accommodating groove (12) has a structure protruding in the thickness direction (T) of the battery cell (10) with respect to the edge portion (13).

In this document, the symbol L indicated in the Cartesian coordinate system represents the longitudinal direction (the direction connecting the pair of lead tabs) of the battery cell (10), the symbol W means the width direction of the battery cell (10), and the symbol T represents the thickness direction of the battery cell (10).

The method for manufacturing the pouch-type battery cell (10) comprises a packaging process, an aging process, a primary gas removal process, an activation process, a secondary removal process, and a sealing process.

The packaging process is a process of accommodating the electrode assembly (15) in a pouch together with an electrolyte, and the aging process is a process of aging the packaged battery cell (10) for a predetermined period.

Also, the primary gas removal process is a process of discharging the internal gas (G) generated inside the battery cell (10) during the packaging process and the aging process to the outside, and the activation process is a process of activating the battery cell (10) by performing charging and discharging of the battery cell (10).

In addition, the secondary gas removal process is a process of discharging the internal gas (G) generated during activation of the battery cell (10) to the outside, and the sealing process is a process of sealing a degas hole (18) of the gas pocket (17) after the gas removal process.

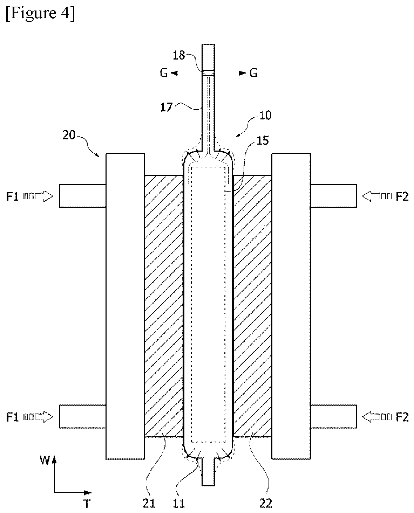

Figure 4 is a schematic diagram showing one operating state of a conventional battery cell pressurizing jig (20).

In the case of the pouch-type battery cell (10), if the gas (G) generated inside the battery cell (10) during the activation process is not efficiently removed, the gas (G) occupies a certain space inside the battery cell (10), thereby causing deformation of the battery while the central portion of the cell case (11) swells.

In addition, if the gas (G) is present in the pouch-type battery cell (10), it adversely affects battery performance, such as capacity and output, and a battery life.

The gas removal process of the pouch-type battery cell (10) proceeds as follows.

At least one degas hole (18) is formed in the gas pocket (17) of the battery cell (10), and the degas hole (18) is connected to the internal space (14) of the pouch-type battery cell (10) to enable fluid movement therewith.

The gas (G) generated during the activation process is discharged to the outside of the battery cell (10) through the degas hole (18) of the gas pocket (17). At this time, the pouch-type battery cell (10) is pressurized with a predetermined force (F1, F2) by a battery cell pressurizing device (20) so that the gas (G) can be smoothly discharged to the outside of the battery cell (10). The pressurizing device (20) pressurizes both sides of the battery cell (10) through a plurality of pressurizing plates (21, 22) to perform operation of pushing out the gas (G) remaining in the battery cell (10).

However, the conventional battery cell pressurizing device (20) has pressurized the central portion of the battery cell (10) where the electrode assembly (15) is located, and accordingly, the gas (G) generated during the activation process moves to the periphery of the central portion of the battery cell.

Therefore, the gas present in the edge portion (13) of the pouch-type battery cell (10) is prevented from moving to other portions, and the edge portion (13) expands, and in some cases, the edge portion (13) of the pouch-type battery cell (10) may be damaged.

Particularly, damage to the edge portion (E, see Figure 2) adjacent to the pair of lead tabs (16) may reduce the insulation resistance of the pouch-type battery cell (10), and an electrolyte may leak through the damaged edge portion (E), followed by productivity deterioration due to product defects.

If the gas generated inside the pouch-type battery cell (10) during the activation process is not efficiently removed, the gas (G) occupies a certain space inside the pouch-type battery cell (10), thereby preventing uniform formation and adversely affecting battery performance, such as capacity and output, and battery life.

### Disclosure

### Technical Problem

The present invention is intended to provide a battery cell pressurizing jig capable of individually pressurizing each region of an electrode assembly region and a lead tap region divided from a pressurizing region of a battery cell, and a battery cell gas removal system comprising the same.

Also, the present invention is intended to provide a battery cell pressurizing jig capable of preventing gas in a battery cell from moving to the edge portion of the battery cell adjacent to a lead tab as a plurality of block portions installed on pressurizing plates individually pressurizes an assembly region and a lead tab region of the battery cell, and a battery cell gas removal system comprising the same.

In addition, the present invention is intended to provide a battery cell pressurizing jig capable of preventing gas from being trapped on an edge portion of a battery cell adjacent to a lead tab and improving a gas removal efficiency of the battery cell in a gas removal process, and a battery cell gas removal system comprising the same.

The present invention is intended to provide a battery cell gas removal system capable of preventing wrinkling of a gas pocket of a battery cell upon a gas removal process and improving insulation of the battery cell upon sealing.

### Technical Solution

The battery cell pressurizing jig according to one example of the present invention may comprise a pair of pressurizing plates for pressurizing both sides of a battery cell, which is disposed therebetween, including an electrode assembly, a pair of lead tabs, and a cell case, and a plurality of block portions installed in each pressurizing plate, dividing a pressurizing region of the cell case into n (n>2, n is an integer) unit regions, and provided to pressurize each unit region of the cell case.

The unit region may comprise an assembly region where the electrode assembly is disposed, and a lead tab region where each lead tab is disposed.

Also, the plurality of block portions may comprise an assembly block portion provided to pressurize the assembly region where the electrode assembly is disposed, and a pair of tab block portions provided to pressurize the lead tab region where each lead tab is disposed.

In addition, the assembly block portion may be elastically connected to the pressurizing plate to protrude in the thickness direction of the battery cell.

Furthermore, each tab block portion may be disposed apart from the assembly block portion, and may be elastically connected to the pressurizing plate to protrude in the thickness direction of the battery cell.

A battery cell pressurizing jig related to one example of the present invention comprises a first pressurizing part for pressurizing one surface of a battery cell including an electrode assembly, a pair of lead tabs electrically connected to the electrode assembly, and a cell case surrounding the electrode assembly, and a second pressurizing part disposed to face the first pressurizing part and for pressurizing the other surface of the battery cell. In addition, the first pressurizing part may comprise a first assembly block portion provided to pressurize an assembly region where the electrode assembly is disposed on one surface of the battery cell, and a pair of first tap block portions each provided to pressurize a pair of lead tab regions including a boundary region between each lead tab and the cell case.

Also, the first pressurizing part may comprise a first pressurizing plate to which the first assembly block portion and the pair of first tab block portions are individually connected, and a first drive part for moving the first pressurizing plate to one surface of the battery cell.

In addition, the first assembly block portion and the pair of first tab block portions may each be connected to the first pressurizing plate via an elastic member.

Furthermore, the first assembly block portion and the pair of first tab block portions may be provided to be movable toward the first pressurizing plate upon each contacting one surface of the battery cell, and each elastic member may be provided to be compressed.

Also, the first pressurizing part may be provided so that the pair of first tab block portions protrudes more toward one surface of the battery cell than the first assembly block portion.

In addition, the first pressurizing part may be provided such that when the first pressurizing plate moves toward one surface of the battery cell, the pair of first tab block portions first contacts each lead tab region, and then the first assembly block portion contacts the assembly region.

Furthermore, the first assembly block portion and the pair of first tab block portions may be disposed apart from each other at a predetermined interval. As one example, the first assembly block portion and the pair of first tab block portions may be disposed apart from each other at a predetermined interval along the longitudinal direction of the battery cell.

Also, the first assembly block portion may be provided to contact one surface of the battery cell with an area larger than that of the first tab block portion. As one example, upon pressurizing one surface of the battery cell, the first assembly block portion may be provided so that its area in contact with one surface of the battery cell is larger than the area of the first tab block portion in contact with one surface of the battery cell.

In addition, the second pressurizing part may comprise a second assembly block portion provided to pressurize an assembly region where the electrode assembly is disposed on the other surface of the battery cell, and a pair of second tab block portions each provided to pressurize a pair of lead tab regions including a boundary region between each lead tab and the cell case.

Furthermore, the second pressurizing part may comprise a second pressurizing plate to which the second assembly block portion and the pair of second tab block portions are individually connected, and a second drive part for moving the second pressurizing plate to the other surface of the battery cell.

Also, the second assembly block portion and the pair of second tab block portions may each be connected to the second pressurizing plate via an elastic member.

In addition, the second assembly block portion and the pair of second tab block portions may be provided to be movable toward the second pressurizing plate upon each contacting the other surface of the battery cell, and each elastic member may be provided to be compressed.

Furthermore, the second pressurizing part may be provided so that the pair of second tab block portions protrudes more toward the other surface of the battery cell than the second assembly block portion.

Also, the second pressurizing part may be provided such that when the second pressurizing plate moves toward the other surface of the battery cell, the pair of second tab block portions first contact each lead tab region, and then the second assembly block portion contacts the assembly region.

In addition, the second assembly block portion and the pair of second tab block portions may be disposed apart from each other at a predetermined interval, and as one example, the second assembly block portion and the pair of second tab block portions may be disposed apart from each other at a predetermined interval in the longitudinal direction of the battery cell.

Furthermore, the second assembly block portion may be provided to contact the other surface of the battery cell with an area larger than that of the second tab block portion. As one example, upon pressurizing the other surface of the battery cell, the second assembly block portion may be provided so that its area in contact with the other surface of the battery cell is larger than the area of the second tab block portion in contact with the other surface of the battery cell.

In addition, a battery cell gas removal system according to one example of the present invention may comprise a vacuum chamber, the battery cell pressurizing jig disposed in the vacuum chamber, a piercing part provided to form at least one degas hole in battery cells arranged in the battery cell pressurizing jig, a sealing part provided to seal the degas hole, and a vacuum pressure applying part providing vacuum pressure to the vacuum chamber.

### Advantageous Effects

As discussed above, the battery cell pressurizing jig related to at least one example of the present invention and the battery cell gas removal system comprising the same have the following effects.

It is possible to divide the pressurizing region of the battery cell into an electrode assembly region and a lead tab region, and it is possible to pressurize the respective regions individually.

Also, as the plurality of block portions installed on the pressurizing plate individually pressurize the assembly region and the lead tab region of the battery cell, it is possible to prevent gas in the battery cell from moving to the edge portion of the battery cell adjacent to the lead tab, and it is possible to prevent deformation of the battery cell.

In addition, it is possible to prevent gas from being trapped on the edge portion of the battery cell adjacent to the lead tab, and it is possible to improve a gas removal efficiency of the battery cell in the gas removal process.

Furthermore, it is possible to prevent wrinkling in the gas pocket of the battery cell upon the gas removal process of the battery cell, and it is possible to improve insulation of the battery cell upon sealing.

### Description of Drawings

Figure 1 is a perspective diagram of a general pouch-type battery cell.
Figure 2 is a plan view of a pouch-type battery cell in a state where a degas hole is provided in a gas pocket.
Figure 3 is a cross-sectional diagram cut along Line A-A of Figure 2.
Figure 4 is a schematic diagram showing one operating state of a conventional battery cell pressurizing jig.
Figure 5 is a configuration diagram of a battery cell gas removal system related to one example of the present invention.
Figure 6 is a perspective diagram of a battery cell pressurizing jig related to one example of the present invention.
Figure 7 is a front view showing one surface of a battery cell.
Figure 8 is a schematic diagram cut along Line A1-A1 in Figure 7.
Figure 9 is a schematic diagram cut along Line A2-A2 in Figure 7.
Figure 10 is a plan view of the battery cell pressurizing jig shown in Figure 6.
Figure 11 is a diagram for explaining one operating state of the battery cell pressurizing jig shown in Figure 10.
Figure 12 is a schematic diagram for explaining a gas removal process inside a battery cell.
Figure 13 is a schematic diagram for explaining a sealing process after completing a gas removal process.

### Mode for Invention

Hereinafter, with reference to the accompanying drawings, a battery cell pressurizing jig according to one example of the present invention, and a battery cell gas removal system comprising the same will be described.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

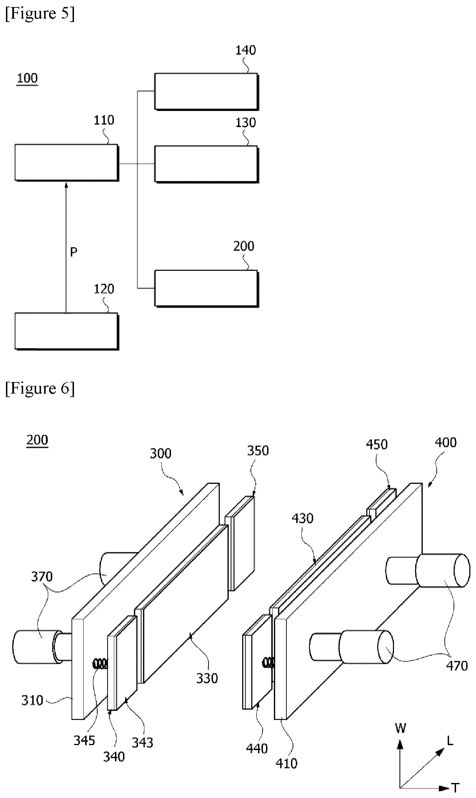

Figure 5 is a configuration diagram of a battery cell gas removal system (100) related to one example of the present invention.

The battery cell gas removal system (100) may comprise a vacuum chamber (110), a battery cell pressurizing jig (200) disposed in the vacuum chamber (110), a piercing part (130) provided to form at least one degas hole in battery cells arranged in the battery cell pressurizing jig (200), a sealing part (140) provided to seal the degas hole, and a vacuum pressure applying part (120) providing vacuum pressure (P) to the vacuum chamber (110).

Figure 6 is a perspective diagram of a battery cell pressurizing jig (200) related to one example of the present invention.

The battery cell pressurizing jig (200) according to one example of the present invention may be a device pressurizing the battery cell so that gas generated during the activation process is discharged to the outside through the degas hole in a gas pocket of the battery cell.

In this document, the symbol L indicated in the Cartesian coordinate system represents the longitudinal direction (the direction connecting the pair of lead tabs) of the battery cell (10), the symbol W means the width direction of the battery cell (10), and the symbol T represents the thickness direction of the battery cell (10).

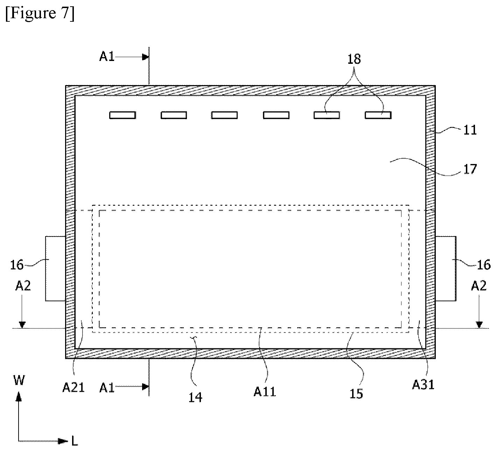

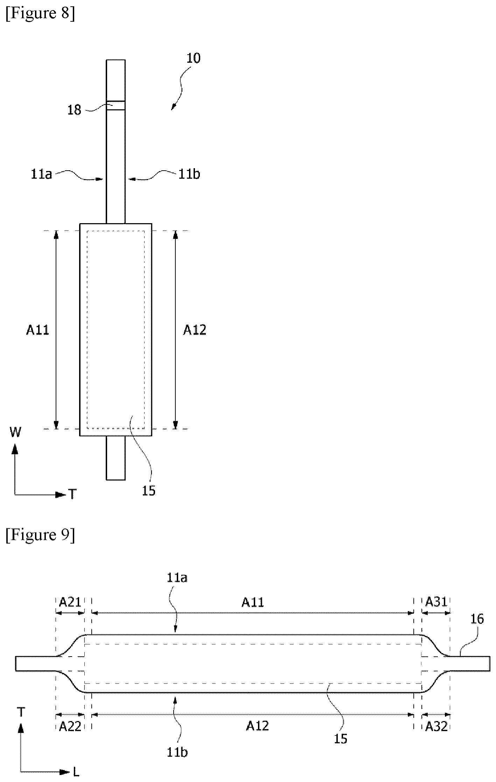

Figure 7 is a front view showing one surface of the battery cell (10), Figure 8 is a schematic diagram cut along Line A1-A1 in Figure 7, and Figure 9 is a schematic diagram cut along Line A2-A2 in Figure 7.

Referring to Figures 2, 3, 7, and 8, the battery cell (10) comprises a cell case (11), an electrode assembly (15) accommodated inside the cell case (11), and a pair of lead tabs (16) electrically connected to the electrode assembly (15).

The cell case (11) may have an accommodating groove (12) in which the electrode assembly (15) is accommodated, and an edge portion (13) surrounding the accommodating groove (12). The accommodating groove (12) may be provided to protrude from the edge portion (13) in the thickness direction (T) of the battery cell. The battery cell (10) may be a pouch-type battery cell (10).

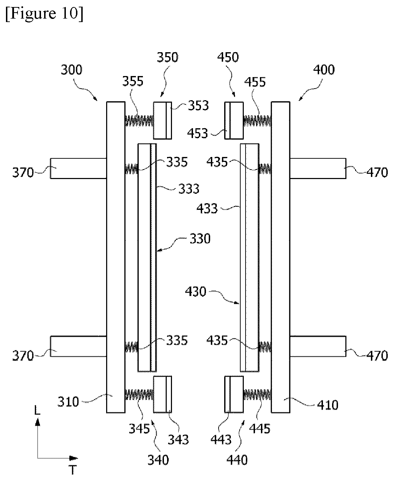

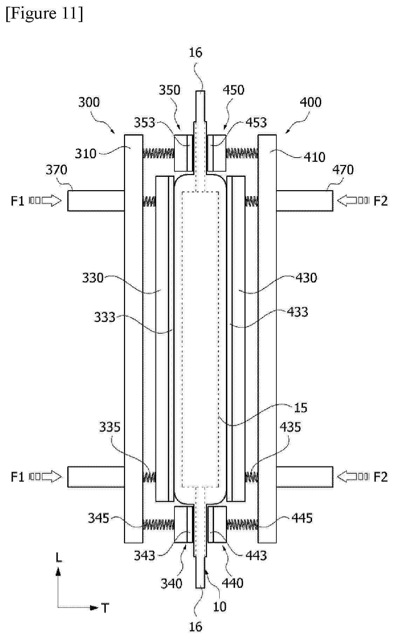

Figure 10 is a plan view of the battery cell pressurizing jig shown in Figure 6, and Figure 11 is a diagram for explaining one operating state of the battery cell pressurizing jig shown in Figure 10.

As described above, the battery cell (10) may comprise an electrode assembly (15), a pair of lead tabs (16) electrically connected to the electrode assembly (15), and a cell case (11) surrounding the electrode assembly (15). Some regions of each lead tab (16) may pass through the edge portion (13) to be exposed to the outside of the cell case (11).

The battery cell pressing jig (200) may comprise a pair of pressurizing parts (300, 400). Specifically, the battery cell pressing jig (200) may comprise a first pressurizing part (300) for pressing one surface (11a) of the battery cell (10), and a second pressurizing part (400) disposed to face the first pressurizing part (300) and for pressing the other surface (11b) of the battery cell (10).

One surface (11a) and the other surface (11b) of the battery cell (10) may be positioned in opposite directions along the thickness direction (T).

The pair of pressurizing parts (300, 400) may be provided to push the gas (G) generated in the activation process of the battery cell (10) from the internal space (14) of the cell case (11) into the gas pocket (17) by pressurizing both sides (one surface and the other surface) of the battery cell (10) in the gas removal process.

Referring to Figures 7 to 9, the gas pocket (17) is a space for collecting gas (G) inside the battery cell (10) and then discharging it to the outside, wherein the gas pocket (17) may be located at the upper part of the accommodating groove (12) where the electrode assembly (15) is disposed along the width direction (W) of the battery cell (10).

The first pressurizing part (300) is disposed on one side of the battery cell (10) (the side facing one surface of the battery cell), and the second pressurizing part (400) is disposed on the other side of the battery cell (10) (the side facing the other surface of the battery cell).

The first pressurizing part (300) and the second pressurizing part (400) are disposed to face each other while placing the battery cell (10) therebetween. The first pressurizing part (300) and the second pressurizing part (400) may have the same structure and operation method, and may be arranged to be symmetrical along the thickness direction (T) of the battery cell (10) based on the battery cell (10).

The first pressurizing part (300) may comprise a first pressurizing plate (310), a plurality of first block portions (330, 340, 350), and a first drive part (370). The plurality of first block portions (330, 340, 350) may be connected to one surface of the first pressurizing plate (310). In this instance, the plurality of first block portions (330, 340, 350) are arranged to face one surface (11a) of the cell case (11).

The first drive part (370) may be provided to move the first pressurizing plate (310) in the first direction (F1) along the thickness direction (T) of the battery cell (10). When the first pressurizing plate (310) is moved toward one surface of the battery cell (10), each of the plurality of first block portions (330, 340, 350) contacts one surface (11a) of the battery cell (10), and the pressurization of the battery cell (10) is performed. The first drive part (370) may comprise a known cylinder device.

Upon pressurizing operation of the first drive part (370), the first pressurizing plate (310) may provide pressurizing force to the battery cell (10) via the plurality of first block portions (330, 340, 350) while moving toward the battery cell (10) in the first direction (F1).

The plurality of first block portions (320) installed on the first pressurizing plate (310) may contact each unit region of the battery cell (10) individually, and provide the pressurizing force of the first drive part (370) to each unit region simultaneously or sequentially.

The plurality of first block portions may be provided to individually contact a plurality of regions of the cell case (11).

The pressurizing region of the cell case (11) may be divided into n (n>2, n is an integer) unit regions. The plurality of regions provided on one surface (11a) of the cell case (11) may comprise a first assembly region (A11) surrounding the electrode assembly (15), and a first lead tab region (A21) and a second lead tab region (A31) adjacent to the pair of lead tabs (16), respectively.

The first pressurizing part (300) may comprise a first assembly block portion (330) provided to pressurize the first assembly region (A11) of one surface (11a) of the battery cell (10), and a pair of first tab block portions (340, 350) provided to pressurize the first and second lead tab regions (A21, A31) including a boundary region between each lead tab (16) and the cell case (11), respectively.

Likewise, the plurality of regions provided on the other surface (11b) of the cell case (11) may comprise a second assembly region (A12) surrounding the electrode assembly (15), and a third lead tab region (A22) and a fourth lead tab region (A32) adjacent to the pair of lead tabs (16), respectively.

The second pressurizing part (400) may comprise a second assembly block portion (430) provided to pressurize the second assembly region (A12) where the electrode assembly (15) is disposed on the other surface (11b) of the battery cell (10), and a pair of second tab block portions (440, 450) provided to pressurize the third and fourth lead tab regions (A22, A32) including a boundary region between each lead tab (16) and the cell case (11), respectively.

Hereinafter, the first pressurizing part (300) will be described with reference to the accompanying drawings.

The first assembly block portion (330) may be provided to be connected to the first pressurizing plate (310) and to pressurize the first assembly region (A11) of the cell case (11) where the electrode assembly (15) is located. Also, the first assembly block portion (330) may be elastically connected to the first pressurizing plate (310) to protrude from one surface of the first pressurizing plate (310) to the thickness direction (T) of the battery cell (10). The first assembly block portion (330) may be elastically connected to the first pressurizing plate (310) by an elastic member (335) such as a spring.

The first assembly block portion (330) may be provided that the portion contacting the cell case (11) is flat.

A protection pad (333) may be provided on the first assembly block portion (330). The protection pad (333) may be provided on a contact surface where the first assembly block portion (330) contacts the first assembly region (A11). The protection pad (333) may be made of a compressible material, and as one example, a sponge may be used as the protection pad (333).

The first assembly region (A11) is a portion where the electrode assembly (15) is disposed, which may be a portion protruding more in the thickness direction (T) of the battery cell than the first lead tab region (A21, A31).

The first assembly block portion (330) may have a long side extending along the longitudinal direction (L) of the battery cell connecting the pair of lead tabs (16).

Also, the first assembly block portion (330) may be disposed away from each first tab block portion (340, 350) in the longitudinal direction (L) of the battery cell.

As one example, the first assembly block portion (330) may have the same width as that of the first tab block portion (340, 350) along the width direction (W) of the battery cell.

Upon pressurizing operation of the first drive part (370), the first assembly block portion (330) may contact the first assembly region (A11) on one surface of the cell case (11). The first assembly block portion (330) may pressurize the first assembly region (A11) of the cell case (11) while the elastic member (335) is elastically compressed by the pressurizing force of the first drive part (370).

The gas (G) existing in the internal space (14) of the cell case (11) where the electrode assembly (15) is disposed may move toward the gas pocket (17) through the force pressurized by the first assembly block portion (330) and the second assembly block portion (430), and the gas (G) moved to the gas pocket (17) may be discharged to the outside of the battery cell (10) through the degas hole (18).

The pair of first tab block portions (340, 350) may be provided to pressurize the first lead tab region (A21) and the second lead tab region (A31), respectively.

Referring to Figures 6 and 10, the pair of first tab block portions (340, 350) may each be connected to the first pressurizing plate (330). Each first tab block portion (340, 350) may be provided so that the portion contacting the cell case (11) is flat.

In addition, the first lead tab region (A21) and the second lead tab region (A31) are regions spaced apart from each other in the longitudinal direction (L) of the battery cell (10) with respect to the first assembly region (A11), respectively, which may each refer to a region including some regions of the lead tabs (16).

The first tab block portion (340, 350) may be connected to the first pressurizing plate (310) so that it protrudes more toward one surface of the battery cell (10) than the first assembly block portion (330).

Each first tab block portion (340, 350) may be elastically connected to the first pressurizing plate (310) by an elastic member (345, 355). Each first tab block portion (340, 350) may be elastically connected to the first pressurizing plate (310) to move toward the first pressurizing plate (310) upon contacting one surface (11a) of the battery cell (10).

The pair of first tab block portions (340, 350) may be elastically connected to the first pressurizing plate (310) to protrude more in the thickness direction (T) of the battery cell by a step between the first assembly region (A11) and the first lead tab region (A21) and a step between the first assembly region (A11) and the second lead tab region (A31).

A protection pad (343, 353) may be provided on each first tab block portion (340, 350). The protection pad (343, 353) may be provided on a contact surface where the first tab block portion (340, 350) contacts the first lead tab region (A21) or the second lead tab region (A31). The protection pad (343, 353) may be formed of a compressible material, and a sponge may be used as the protection pad (343, 353).

Upon pressurizing operation of the first drive part (370), the pair of first tab block portions (340, 350) may contact the first lead tab region (A21) and the second lead tab region (A31) on one surface of the cell case (11). The pair of first tab block portions (340, 350) may pressurize the lead tab region (A21) and the second lead tab region (A31) on one surface (11a) of the cell case (11), while the elastic members (345, 355) are each elastically compressed by the pressurizing force of the first drive part (370).

Upon pressurizing operation of the first drive part (370), the pair of first tab block portions (340, 350) may pressurize the regions together with the first assembly block portion (330) simultaneously or sequentially. As one example, they may be provided so that the first tab block portions (340, 350) first pressurize the first lead tab region (A21) and the second lead tab region (A31), and then the first assembly block portion (330) pressurizes the first assembly region (A11).

The gas (G) present in the edge portion (13) of the cell case (11) adjacent to the pair of lead tabs (16) may move toward the accommodating groove (12) and the gas pocket (17) using the pressurizing force by the first tab block portions (340, 350) and the second tab block portions (440, 450), and may be discharged to the outside of the battery cell (10) through the degas hole (18).

Hereinafter, the second pressurizing part (400) will be described.

The second pressurizing part (400) may comprise a second pressurizing plate (410), a plurality of second block portions (430, 440, 450), and a second drive part (470).

The second pressurizing plate (410) is disposed to be spaced apart from the other surface (11b) of the cell case (11). The plurality of second block portions (430, 440, 450) are installed on one surface of the second pressurizing plate (410) (the side facing the other surface (11b) of the cell case (11)). The second drive part (470) may be connected to the other surface of the second pressurizing plate (410).

The second drive part (470) is provided to move the second pressurizing plate (410) in a second direction (F2) along the thickness direction (T) of the battery cell. The second pressurizing plate (410) may provide a pressurizing force to the battery cell (10) via the plurality of second block portions (430, 440, 450) while moving in the second direction (F2) by the second drive part (470). The second drive part (470) may comprise a known cylinder device.

The first direction (F1) is a direction toward one surface of the battery cell, and the second direction (F2) is a direction toward the other surface of the battery cell, where the first direction (F1) and the second direction (F2) may be opposite directions.

The plurality of second block portions may comprise a second assembly block portion (430) and a pair of second tab block portions (440, 450).

The second assembly region (A12) refers to the assembly region of the other surface (11b) of the cell case (11), and the third lead tab region (A22) and the fourth lead tab region (A32) refer to a pair of lead tab regions on the other surface of the cell case (11), respectively.

The second assembly block portion (430) is provided to contact the second assembly region (A12) of the cell case (11). The second assembly block portion (430) may comprise a protection pad (433), and may be connected to the second pressurizing plate (410) through an elastic member (435).

Upon pressurizing operation of the second drive part (470), the second assembly block portion (430) may contact the second assembly region (A12) on the other surface (11b) of the cell case (11), and may pressurize the second assembly region (A12) of the cell case (11) while the elastic member (435) is elastically compressed by the pressurizing force of the second drive part (470).

The second assembly block portion (430) may be elastically connected to the second pressurizing plate (410) to protrude in the thickness direction (T) of the battery cell (10). The second assembly block portion (430) may have a long side extending along the longitudinal direction (L) of the battery cell connecting the pair of lead tabs (16).

A protection pad (433) may be provided on the second assembly block portion (430). The protection pad (433) may be provided on a contact surface where the second assembly block portion (430) contacts the second assembly region (A12). The protection pad (433) may be formed of a compressible material. As one example, a sponge may be used as the protection pad (433).

The pair of second tab block portions (440, 450) is provided to pressurize the third lead tab region (A22) and the fourth lead tab region (A32), respectively.

The pair of second tab block portions (440, 450) is disposed to face the pair of first tab block portions (340, 350) while placing the battery cell (10) therebetween.

The pair of second tab block portions (440, 450) is provided to contact the third lead tab region (A22) and the fourth lead tab region (A32) of the cell case (11). Each second tab block portions (440, 450) may comprise a protection pad (443, 453), and may be individually connected to the second pressurizing plate (410) through an elastic member (445, 455).

Upon pressurizing operation of the second drive part (470), the pair of second tab block portions (440, 450) may contact the third lead tab region (A22) and the fourth lead tab region (A22) on the other surface (11b) of the cell case (11), and may pressurize the third lead tab region (A22) and the fourth lead tab region (A32) of the cell case (11), respectively, while each elastic member (445, 455) is elastically compressed by the pressurizing force of the second drive part (470).

Upon pressurizing operation of the second drive part (470), the pair of second tab block portions (440, 450) may pressurize the third lead tab region (A22) and the fourth lead tab region (A32) together with the second assembly block portion (430) simultaneously or sequentially. As one example, they may be provided so that the second tab block portions (440, 450) first pressurize the third lead tab region (A22) and the fourth lead tab region (A32), and then the second assembly block portion (430) pressurizes the second assembly region (A12).

The third lead tab region (A22) and the fourth lead tab region (A32) are regions spaced apart from each other in the longitudinal direction (L) of the battery cell (10) with respect to the second assembly region (A12), which refer to regions including some regions of the lead tabs (16).

As one example, the pair of second tab block portions (440, 450) may be connected to the second pressurizing plate (410) to protrude more toward the other surface (11b) of the battery cell (10) than the second assembly block portion (430).

Each second tab block portion (440, 450) may be disposed to be spaced apart from the second assembly block portion (430) in the longitudinal direction (L) of the battery cell. Each second tab block portion (440, 450) is elastically connected to the second pressurizing plate (410) to move toward the second pressurizing plate (410) when it contacts the battery cell (10).

A protection pad (443, 453) may be provided on each second tab block portion (440, 450). The protection pads (443, 453) may be provided on contact surfaces where each second tab block portion (440, 450) contacts the third lead tab region (A22) and the fourth lead tab region (A32).

The protection pad (443, 453) may be made of a compressible material, and as one example, a sponge may be used as the protection pad (443, 453).

Hereinafter, the battery cell gas removal system (100) will be described.

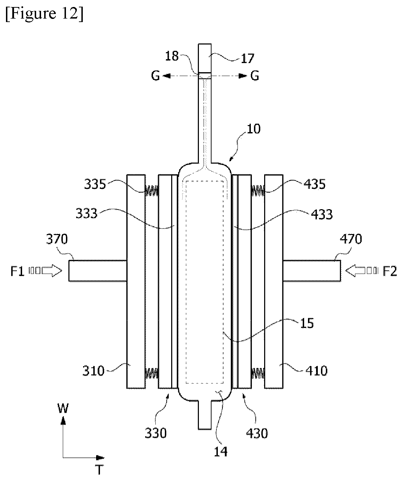

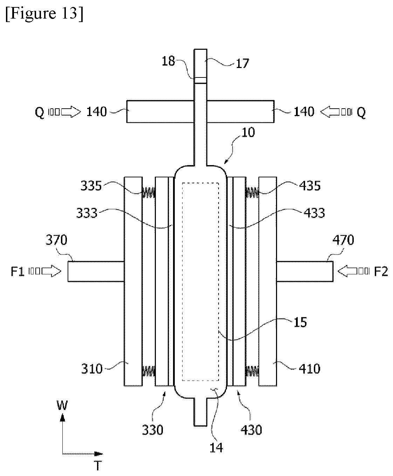

Figure 12 is a schematic diagram for explaining a gas removal process inside a battery cell, and Figure 13 is a schematic diagram for explaining a sealing process after completing a gas removal process.

The battery cell gas removal system (100) is used to perform a gas removal process of removing gas (G) generated in an activation process of a battery cell (10).

The battery cell gas removal system (100) may comprise a vacuum chamber (110), a vacuum pressure applying part (120), a piercing part (130), a sealing part (140), and a battery cell pressurizing jig (200).

The vacuum chamber (110) is a space where a gas removal process is performed. A battery cell pressurizing jig (200), a piercing part (130), and a sealing part (140) may each be installed in the vacuum chamber (110).

The vacuum pressure applying part (120) is a device applying vacuum pressure (P) to the vacuum chamber (110). The vacuum pressure applying part (120) may provide vacuum pressure (P) to the vacuum chamber (110) upon the gas removal process.

The battery cell pressurizing jig (200) pressurizes both sides of the battery cell (10) while placing the battery cell (10) therebetween, thereby performing operation of pushing gas (G) from the internal space (14) of the cell case (11) to the gas pocket (17).

The piercing part (130) may be disposed on the upper part of the battery cell pressurizing jig (200). The piercing part (130) may penetrate the gas pocket (17) in the thickness direction (T) of the battery cell to form at least one degas hole (18) in the gas pocket (17). At this time, the gas (G) may be discharged to the outside of the battery cell (10) through the degas hole (18).

The sealing part (140) is provided to seal the degas hole (18) of the gas pocket (17) when exhaust of gas inside the battery cell (10) is completed. The sealing process of the sealing part (140) may be performed after the gas removal process. As one example, upon the sealing process, the battery cell pressing jig (200) may be provided to maintain pressurizing force on the battery cell (10).

When the battery cell (10) is disposed in the space between the pair of pressurizing parts (300, 400), the battery cell pressurizing jig (200) operates so that the pair of pressurizing part (300, 400) pressurizes both sides of the battery cell (10).

The piercing part (130) may operate in a state where the battery cell pressurizing jig (200) holds and fixes the battery cell (10). The piercing part (130) may penetrate the gas pocket (17) in the thickness direction (T) of the battery cell in a state where the battery cell pressurizing jig (200) holds both sides of the battery cell (10) to form at least one degas hole (18) in the gas pocket (17).

The first pressurizing part (300) may operate so that the first assembly block portion (330) and the first tab block portions (340, 350) contact each unit region (A11, A21, A31) on one surface (11a) of the cell case (11), and pressurize each unit region (A11, A21, A31) on one surface of the cell case (10) simultaneously or sequentially.

The second pressurizing part (400) may operate so that the second assembly block portion (430) and the second tab block portions (440, 450) contact each unit region (A12, A22, A32) on the other surface (11b) of the cell case (11), and pressurize each unit region (A12, A22, A32) on the other surface of the cell case (10) simultaneously or sequentially.

Upon the battery cell pressurizing process, the first pressurizing part (300) pressurizes the battery cell (10) in the first direction (F1), and the second pressurizing part (400) pressurizes the battery cell (10) in the second direction (F2). The second direction (F2) is the opposite direction to the first direction (F1).

When the battery cell pressurizing jig (200) pressurizes both sides of the battery cell (10), gas (G) is discharged from the internal space (14) of the cell case (11) via the gas pocket (17) to the vacuum chamber (110) through the degas hole (18).

The gas (G) may be discharged inside the cell case (11) to the vacuum chamber (110) by the pressure difference between the pressure of the internal space (14) of the cell case (11) and the vacuum pressure (P).

When the gas removal process is completed, the sealing process may be performed by applying heat (Q) to the degas hole (18) of the sealing part (140).

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to the battery cell pressurizing jig related to at least one example of the present invention, and the battery cell gas removal system comprising the same, it is possible to divide the pressurizing region of the battery cell into an electrode assembly region and a lead tab region, and it is possible to pressurize the respective regions individually.

## Claims

1. A battery cell pressurizing jig comprising:
a first pressurizing part for pressurizing one surface of a battery cell including an electrode assembly, a pair of lead tabs electrically connected to the electrode assembly, and a cell case surrounding the electrode assembly; and
a second pressurizing part disposed to face the first pressurizing part and for pressurizing the other surface of the battery cell, wherein
the first pressurizing part comprises a first assembly block portion provided to pressurize an assembly region where the electrode assembly is disposed on one surface of the battery cell, and a pair of first tap block portions each provided to pressurize a pair of lead tab regions including a boundary region between each lead tab and the cell case.

2. The battery cell pressurizing jig according to claim 1, wherein
the first pressurizing part further comprises a first pressurizing plate to which the first assembly block portion and the pair of first tab block portions are individually connected, and a first drive part for moving the first pressurizing plate to one surface of the battery cell.

3. The battery cell pressurizing jig according to claim 2, wherein
the first assembly block portion and the pair of first tab block portions are each connected to the first pressurizing plate via an elastic member.

4. The battery cell pressurizing jig according to claim 3, wherein
the first assembly block portion and the pair of first tab block portions are provided to be movable toward the first pressurizing plate upon each contacting one surface of the battery cell, and each elastic member is provided to be compressed.

5. The battery cell pressurizing jig according to claim 2, wherein
the first pressurizing part is provided so that the pair of first tab block portions protrudes more toward one surface of the battery cell than the first assembly block portion.

6. The battery cell pressurizing jig according to claim 5, wherein
the first pressurizing part is provided such that when the first pressurizing plate moves toward one surface of the battery cell, the pair of first tab block portions first contacts each lead tab region, and then the first assembly block portion contacts the assembly region.

7. The battery cell pressurizing jig according to claim 1, wherein
the first assembly block portion and the pair of first tab block portions are disposed apart from each other at a predetermined interval, and
the first assembly block portion is provided to contact one surface of the battery cell with an area larger than that of the first tab block portion.

8. The battery cell pressurizing jig according to claim 1, wherein
the second pressurizing part comprises a second assembly block portion provided to pressurize an assembly region where the electrode assembly is disposed on the other surface of the battery cell, and a pair of second tab block portions each provided to pressurize a pair of lead tab regions including a boundary region between each lead tab and the cell case.

9. The battery cell pressurizing jig according to claim 8, wherein
the second pressurizing part further comprises a second pressurizing plate to which the second assembly block portion and the pair of second tab block portions are individually connected, and a second drive part for moving the second pressurizing plate to the other surface of the battery cell.

10. The battery cell pressurizing jig according to claim 9, wherein
the second assembly block portion and the pair of second tab block portions are each connected to the second pressurizing plate via an elastic member.

11. The battery cell pressurizing jig according to claim 10, wherein
the second assembly block portion and the pair of second tab block portions are provided to be movable toward the second pressurizing plate upon each contacting the other surface of the battery cell, and each elastic member is provided to be compressed.

12. The battery cell pressurizing jig according to claim 8, wherein
the second pressurizing part is provided so that the pair of second tab block portions protrudes more toward the other surface of the battery cell than the second assembly block portion.

13. The battery cell pressurizing jig according to claim 12, wherein
the second pressurizing part is provided such that when the second pressurizing plate moves toward the other surface of the battery cell, the pair of second tab block portions first contact each lead tab region, and then the second assembly block portion contacts the assembly region.

14. The battery cell pressurizing jig according to claim 8, wherein
the second assembly block portion and the pair of second tab block portions are disposed apart from each other at a predetermined interval, and
the second assembly block portion is provided to contact the other surface of the battery cell with an area larger than that of the second tab block portion.

15. A battery cell gas removal system comprising:
a vacuum chamber;
the battery cell pressurizing jig according to claim 1, disposed in the vacuum chamber;
a piercing part provided to form at least one degas hole in battery cells arranged in the battery cell pressurizing jig;
a sealing part provided to seal the degas hole; and
a vacuum pressure applying part providing vacuum pressure to the vacuum chamber.
